# EUROPÄISCHE PATENTSCHRIFT

(11) **EP 1 151 884 B1**
(45) Veröffentlichungstag und Bekanntmachung des Hinweises auf die Patenterteilung: **21.03.2007**
(21) Anmeldenummer: 01109840.7
(22) Anmeldetag: 23.04.2001
(51) Int. Cl.: B60J 7/20, B60J 7/047

(54) **Fahrzeug mit einem öffnenden Fahrzeugdach**
Vehicle with a convertible vehicle roof
Véhicule avec un toit de véhicule convertible

(30) Priorität: 04.05.2000 DE 10021464
(43) Veröffentlichungstag der Anmeldung: 07.11.2001
(73) Patentinhaber: Webasto Vehicle Systems International GmbH, 82131 Stockdorf (DE)
(72) Erfinder: De Gaillard, Francois, 85390 Mouilleron en Pareds (FR)
(74) Vertreter: Konnerth, Dieter Hans

(56) Entgegenhaltungen:
- EP-A- 0 101 322
- EP-A- 0 989 008
- DE-A- 19 845 734
- FR-A- 2 744 957

## Beschreibung

Die Erfindung betrifft ein Fahrzeug, insbesondere eine Limousine oder ein Coupe, mit einem Fahrzeugdach mit karosseriefesten Dachlängsholmen, mit einer Dachöffnung im Fahrzeugdach, mit einer beweglichen Dachteileinrichtung zum wahlweisen Verschließen oder zumindest teilweisen Freigeben der Dachöffnung sowie mit einer sich an das Fahrzeugdach anschließenden Heckscheibe.

Beim Fahren in einem offenen Personenkraftwagen wie z. B. einem Cabriolet besteht bei einem Unfall mit Überschlag des Fahrzeugs ein hohes Verletzungsrisiko für die Fahrzeuginsassen. Zum Insassenschutz bei geöffnetem Dach werden daher bei Cabrios feste oder ausfahrbare Überrollbügel eingebaut. Limousinen und Coupes bieten eine hohe Sicherheit bei einem Überschlag, jedoch ist auch bei Einbau eines öffnungsfähigen Daches, z. B. eines Schiebedaches, nur eine begrenzte Dachöffnung möglich, die ein Fahrgefühl wie beim Fahren eines offenen Cabriolets üblicherweise nicht vermitteln kann.

In der EP 0 591 644 B1 ist ein Fahrzeug mit einem Fahrzeugdach beschrieben, das eine Dachöffnung aufweist, die mittels Lamellen eines Lamellendaches wahlweise verschließbar oder zumindest teilweise zu öffnen ist. Zum Öffnen der Dachöffnung werden die an beidseitigen dachfesten Führungen verschiebbar gelagerten Lamellen nach hinten unter einen sich an die Dachöffnung nach hinten anschließenden festen Dachteil bewegt. In der Ablagestellung können die Lamellen zu einem Paket von relativ geringer Höhe gestapelt sein oder sie sind in gegenseitigem Höhenabstand jalousieartig vor einer Heckscheibe angeordnet.

Aus der FR 2 718 485 ist ein Schiebehimmel für ein geschlossenes durchsichtiges Fahrzeugdach bekannt geworden. Der Schiebehimmel enthält einzelne Lamellen, die an beidseitigen Dachlängsführungen verschiebbar gelagert sind. Beim Öffnen des Schiebehimmels werden die einzelnen Lamellen nach hinten unter das durchsichtige Fahrzeugdach in eine Ablagestellung verschoben, in der sie als Paket übereinander angeordnet sind.

In der DE 196 34 507 C1 ist ein in ein Fahrzeugheck eines Personenkraftwagens versenkbares Fahrzeugdach beschrieben. Eine bewegliche Dachanordnung, die wahlweise zum Verschließen oder Freigeben einer Dachöffnung vorgesehen ist, ist insbesondere als Lamellendach gestaltet, das beim Öffnen an einem Dachrahmen paketförmig zusammenlegbar und mit dem Fahrzeugdach im Fahrzeugheck versenkbar ist.

In der DE 298 12 103 U1 ist eine Cabriolimousine beschrieben, die einen Dachaufbau mit karosseriefesten Dachlängsholmen aufweist, wobei der Dachaufbau zu öffnen ist, indem Dachteile, die zwischen den Dachlängsholmen verschiebbar gelagert sind, und eine Heckscheibe als Stapel angeordnet werden, der in einem Hohlraum einer Heckklappe oder einer Kofferraumklappe verstaubar ist. Die Heckscheibe ist an einem inneren Klappenteil der Heckklappe mittels vorderer und hinterer Schiebekulissen verschiebbar gelagert. Des weiteren ist am inneren Klappenteil rückseitig eine Abdeckung schwenkbar angelenkt, die geöffnet wird, um Raum für den Stapel bei seinem Verschieben in den Hohlraum der Heckklappe zu geben.

Aus der EP-A 0101322 ist ein Fahrzeug gemäß des Oberbegriffs des Anspruchs 1 bekannt. Nachteil ist, daß die unter der Kofferraumklappe gelagerten Teile mit dieser zusammen bei dieser Öffnung bewegt werden müssen.

Aufgabe der Erfindung ist es, ein eingangs genanntes Fahrzeug zu schaffen, dessen Fahrzeugdach großflächig zu öffnen ist und dennoch eine hohe Steifigkeit als Insassenschutz bei einem Fahrzeugüberschlag aufweist.

Die Aufgabe wird bei dem eingangs genannten Fahrzeug erfindungsgemäß dadurch gelöst, daß die Dachteileinrichtung Dachteilelemente aufweist, die an seitlichen Führungen verschiebbar geführt und beim Öffnen der Dachteileinrichtung in einen hinteren Ablageraum ablegbar sind, der insbesondere im wesentlichen unterhalb einer Fahrzeug-Gürtellinie angeordnet ist, und daß die Heckscheibe mittels einer Führungseinrichtung an der Karosserie bewegbar angeordnet ist und aus ihrer Schließstellung, in der sie eine von der Karosserie begrenzte Heckscheibenöffnung verschließt, in eine Offenstellung absenkbar ist, in der sie aus der Heckscheibenöffnung entfernt und zumindest teilweise unter einer Kofferraumklappe angeordnet ist. Auf diese Weise läßt sich eine Dachöffnung bilden, die sich wie bei einem Cabriolet von einer Frontscheibe bis zu der Kofferraumklappe über den gesamten Fahrgastinnenraum erstreckt, wobei jedoch gegenüber einem Cabriolet die Dachlängsholme in ihrer karosseriefesten Anordnung verbleiben und damit einen verbesserten Insassenschutz bereitstellen, falls sich das Fahrzeug überschlägt und auf dem Dach zu liegen kommt. Die Dachlängsholme sind über hintere Dachsäulen wie z. B. die C-Säulen an der Karosserie befestigt. Der hintere Ablageraum für die Dachteilelemente befindet sich bevorzugt in einer abgesenkten Position, so daß er sich nicht oder nicht wesentlich über eine Gürtellinie des Fahrzeugs erhebt, die vom Unterrand der Seitenscheiben und dem Kofferraumdeckel gebildet ist. Damit wird die freie Durchsicht vom Fahrzeuginnenraum nach hinten nicht behindert. Der Ablageraum ist somit bei einer vier- oder fünfsitzigen Limousine hinter den Rücksitzen in etwa unterhalb des Oberrandes der Rücksitze. Durch die Anordnung der Führungseinrichtung für die Heckscheibe unmittelbar an der festen Karosserie bzw. Karosseriestruktur ergibt sich ein einfacherer Aufbau gegenüber einer Führung an einer Heckklappe.

Die bewegliche Dachteileinrichtung ist insbesondere ein Lamellendach, das zum Verschließen der Dachöffnung bevorzugt verwendbar ist und beim Öffnen in eine kompakte Anordnung in den hinteren Ablageraum überführbar ist. Die Dachteilelemente bzw. die Lamellen können lediglich längsverschiebbar sein oder sie können aus ihrer Schließstellung auch in eine Lüftungsstellung verschwenkbar sein oder sie sind als in Längsrichtung schmale Lamellenteile in der Art eines Rollos aneinander befestigt und werden in dem Ablageraum aufgewickelt. Anstelle der Lamellen kann auch eine Dachteileinrichtung mit einer flexiblen Abdekkung, beispielsweise ein Faltdach, verwendet werden.

In Abhängigkeit von der Größe der Heckscheibe und der Kofferraumklappe kann die Heckscheibe teilweise oder vollständig in Öffnungsstellung unter der Kofferraumklappe angeordnet werden. Insbesondere wenn die geschlossene Heckscheibe und die Kofferraumklappe in Längsrichtung unter einem Winkel zueinander stehen, wird die Heckscheibe während des Öffnungsvorgangs um ihren Hinterrand verschwenkt, so daß sie möglichst parallel unter der Kofferraumklappe und damit platzsparend im Kofferraum untergebracht ist.

Vorteilhafte Ausgestaltungen der Erfindung sind in den Unteransprüchen angegeben.

Um eine geneigt angeordnete Heckscheibe platzsparend unter die Kofferraumklappe zu fahren, ist es zweckmäßig, wenn die Heckscheibe im Bereich ihres Hinterrandes um eine Querachse schwenkbar an einer hinteren Führungseinrichtung gelagert ist.

Bevorzugt weist die hintere Führungseinrichtung zwei voneinander beabstandete, insbesondere parallele Längsführungsschienen auf, die in Seitenbereichen des Kofferraums angeordnet sind. Damit wird die Zugänglichkeit des Kofferraumes von der Führungseinrichtung nicht behindert und eine sichere und feste Abstützung und Führung durch eine breite Führungsbasis gebildet.

Zweckmäßigerweise sind an der Heckscheibe Lagerteile wie insbesondere seitlich hervorstehende Zapfen angebracht, die an den Längsführungsschienen verschiebbar geführt sind, wobei die Lagerteile mit in den Längsführungsschienen verschiebbar gelagerten Gleitelementen gekoppelt sein können, die von einer Antriebseinrichtung bewegbar sind.

Zur sicheren Führung der Heckscheibe kann sie im Bereich ihres Vorderrandes mit einer vorderen Führungseinrichtung gekoppelt sein, die zwei nichtparallele Führungsschienen aufweisen kann, an denen die Heckscheibe über Ausgleichselemente verschiebbar gelagert ist. Zweckmäßigerweise werden nichtparallele Führungsschienen verwendet, die an die vom Dach nach außen geneigt verlaufenden C-Säulen angepaßt sind.

Bevorzugt ist die Heckscheibe beim Öffnungsvorgang mittels der vorderen Führungseinrichtung in einer anfänglichen Absenkbewegung aus einem Heckscheibenrahmen geführt.

Die Dachteilelemente bzw. Lamellen sind zweckmäßigerweise an Längsführungen geführt, die entlang der seitlichen Dachlängsholme und abwärts zu dem Ablageraum verlaufen und sie werden mittels einer insbesondere an einem Windlauf angeordneten Antriebseinrichtung verschoben.

Bevorzugt ist eine Betätigungseinrichtung vorgesehen, mit der das Lamellendach und die Heckscheibe in gekoppelter Abfolge oder unabhängig voneinander zu öffnen und zu schließen sind.

Gemäß einer Ausführungsform ist der Ablageraum für die Dachteilelemente bzw. die Lamellen von einer Abdeckung, insbesondere einer Hutablage oder eine Innenraumabdeckung des Kofferraumes, bei geschlossenem Lamellendach abdeckt und er wird durch Entfernen der Abdeckung aus ihrer Abdeckposition für die Lamellen aufnahmebereit.

Die Abdeckung kann in eine untere Stellung verfahrbar sein, in der sie einen Boden des Ablageraumes bildet.

Nachfolgend wird ein Ausführungsbeispiel des Fahrzeugs unter Bezugnahme auf Zeichnungen näher erläutert. Es zeigt:
- Fig. 1: in einer perspektivischen Heckansicht ein Fahrzeug mit einem Lamellendach und einer daran angrenzenden Heckscheibe in Schließstellung;

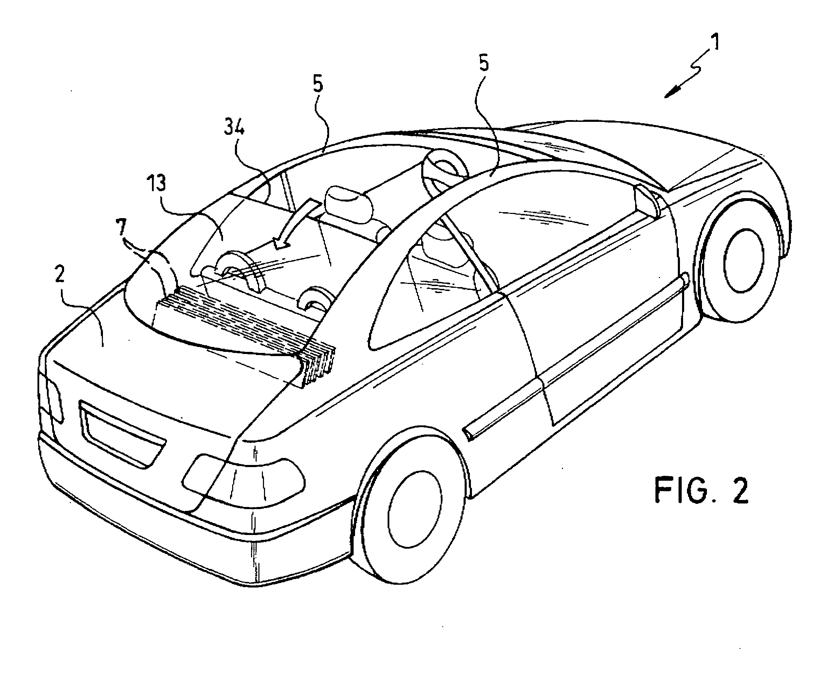

- Fig. 2: in einer perspektivischen Heckansicht gemäß Fig. 1 das Fahrzeug mit geöffnetem und abgelegtem Lamellendach;
- Fig. 3: in einer perspektivischen Heckansicht gemäß Fig. 2 das Fahrzeug mit zusätzlich geöffneter Heckscheibe;
- Fig. 4: in einer perspektivischen Heckansicht in schematischer Darstellung das Fahrzeug mit Lager- und Führungseinrichtungen für das Lamellendach und die Heckscheibe;
- Fig. 5: in einer Seitenansicht in schematischer Darstellung das Fahrzeug mit dem Lamellendach und der Heckscheibe in unterschiedlichen Stellungen; und
- Fig. 6: in einer Draufsicht die Heckscheibe mit einer Führungseinrichtung.

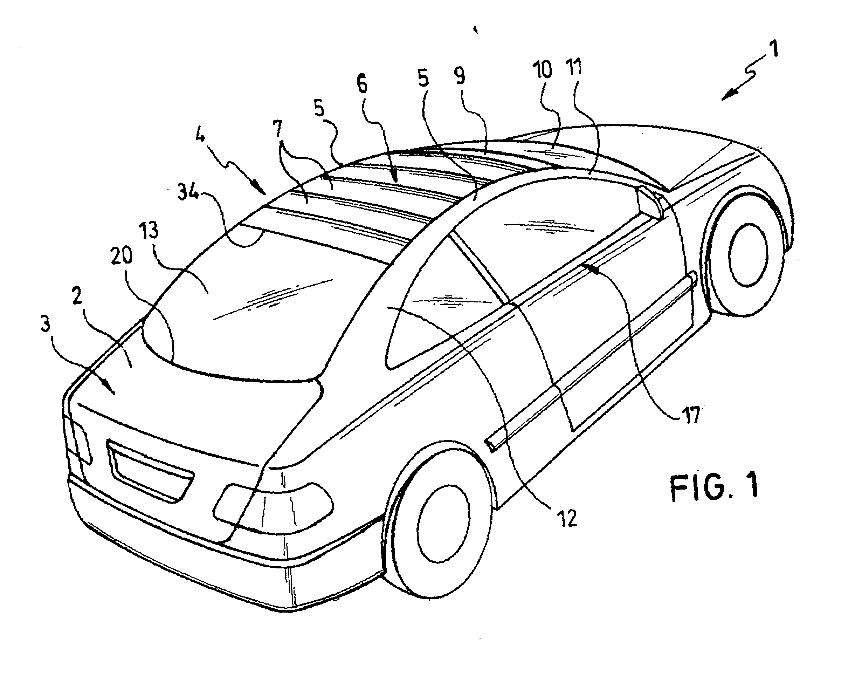

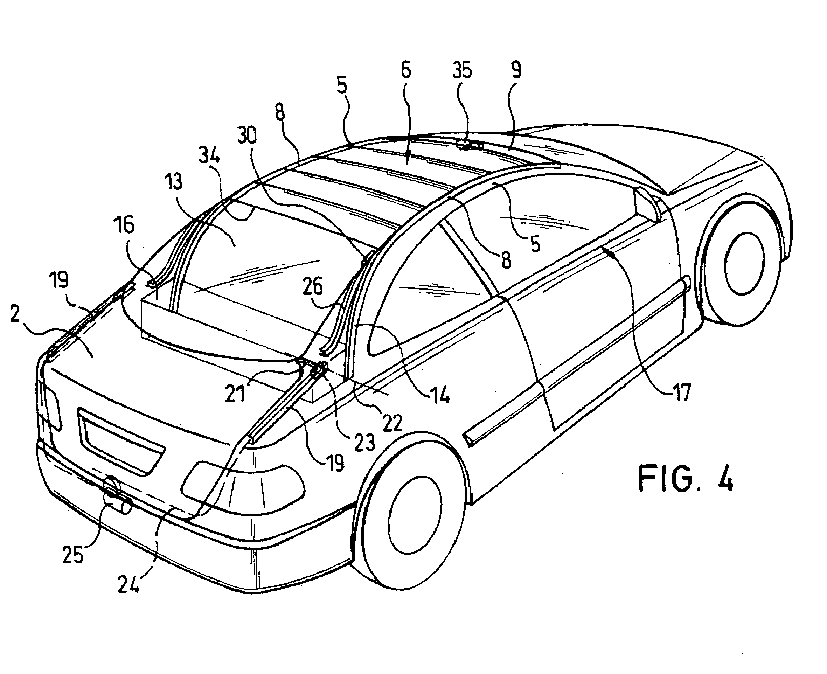

Ein Fahrzeug 1 (siehe Fig. 1), das im Ausführungsbeispiel ein Personenkraftwagen in der Art einer Limousine oder eines Coupés mit einem von einer Kofferraumklappe 2 verschließbaren Kofferraum 3 ist, weist ein Fahrzeugdach 4 mit seitlichen Dachlängsholmen 5 auf, zwischen denen ein Lamellendach 6 zum wahlweisen Verschließen oder zumindest teilweisen Freigeben einer zwischen den Dachlängsholmen 5 gebildeten Dachöffnung angeordnet ist. Das Lamellendach 6 ist aus mehreren Lamellen 7 gebildet, die in Querrichtung mit ihren gegenüberliegenden Enden an jeweiligen Führungsschienen 8 (siehe Fig. 4), die an den Dachlängsholmen 5 angebracht oder daran ausgebildet sind, verschiebbar gelagert sind. Die Dachlängsholme 5 grenzen vorne im Bereich des Windlaufs 9, der am Oberrand einer Windschutzscheibe 10 angeordnet ist, an die A-Säulen 11 an und setzen sich nach hinten als C-Säulen 12 fort, die fest an der Karosserie verankert sind. Eine Heckscheibe 13 ist zwischen dem geschlossenen Lamellendach 6 und der Kofferraumklappe 2 angeordnet.

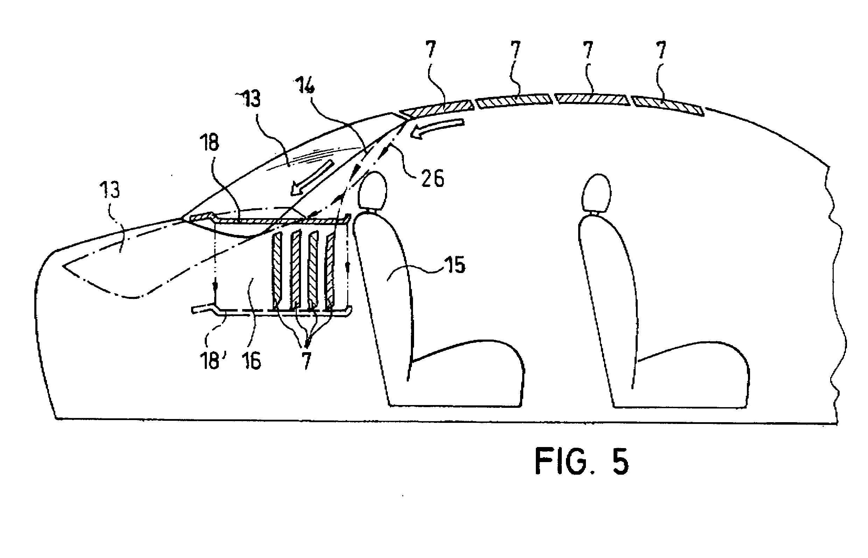

Die Führungsschienen 8 für die Lamellen 7 verlaufen entlang eines hinteren gekrümmten Bahnabschnitts 14 (siehe Fig. 4 und 5) an den Innenseiten der C-Säulen 12 und hinter den Rücksitzlehnen 15 abwärts bis zu einem Ablageraum 16 für die Lamellen 7, der sich in etwa unterhalb einer Gürtellinie 17 des Fahrzeugs in einem Oberabschnitt des Kofferraums 3 und zwischen dem Unter- oder Hinterrand 20 der Heckscheibe 13 und den Sitzlehnen 15 der Rücksitze befindet. Der Ablageraum 16 ist von einer Abdeckung, die beispielsweise eine Hutablage 18 ist, abgedeckt, wenn das Lamellendach 6 geschlossen ist. Wenn das Lamellendach 6 geöffnet wird, wird die Hutablage 18 zumindest teilweise aus ihrer Abdeckstellung entfernt, so daß die Lamellen 7 in den Ablageraum 16 eingebracht und darin geordnet abgelegt werden können. Der Ablageraum 16 kann eine feste Umhüllung aufweisen, wie in Fig. 4 schematisch dargestellt ist. Die in Fig. 5 dargestellte Hutablage 18 ist an Führungen (nicht dargestellt) bewegbar gelagert und kann bis in die zusätzlich dargestellte Position (mit 18' bezeichnet) abgesenkt werden, in der sie einen Boden für den Ablageraum 16 bildet. Bei geschlossenem Lamellendach 6 bleibt somit der Ablageraum 16 als Nutzraum im Kofferraum 3 erhalten.

Die Hutablage 18 kann auch in Querrichtung in einen Vorder- und einen Hinterabschnitt unterteilt sein, so daß lediglich der Vorderabschnitt zum Bereitstellen des Ablageraums 16 abgesenkt wird.

Die einzelnen Lamellen 7 sind derart miteinander verbunden, daß sie in der Schließposition aneinander angrenzend liegen und die Dachöffnung verschließen (siehe Fig. 1) und daß sie zum Öffnen der Dachöffnung in ihrer Gesamtheit entlang den Führungen 8 nach hinten bis in den Ablageraum 16 verschoben werden, wobei sie sukzessive nebeneinander in eine paketförmige Anordnung gestapelt werden. Die gegenseitige Koppelung von jeweils zwei benachbarten Lamellen 7 erfolgt beispielsweise in der Art, wie sie in der FR 2 718 485 für Lamellen eines unter einem Glasdeckel angeordneten Lamellen-Schiebehimmels beschrieben ist. Ein Antriebsmotor 35 für das Lamellendach 6 ist beispielsweise im Bereich des Windlaufs 9 angeordnet und über drucksteife Antriebskabel mit den in den Führungen 8 aufgenommenen Lagerelementen der Lamellen 7 verbunden.

Die Heckscheibe 13 weist eine hintere Führungseinrichtung auf, die zwei voneinander beabstandete Führungsschienen 19 innerhalb der beiden oberen Seitenbereiche des Kofferraums 3 aufweist, wobei die Führungsschienen 19 zweckmäßigerweise möglichst weit zu den Heckseitenwänden hin angeordnet sind. Die Heckscheibe 13 weist im Bereich ihres Hinterrandes 20 zwei seitlich hervorstehende Lagerelement 21 auf, beispielsweise zwei Zapfen, die eine gemeinsame Schwenkachse 22 bilden und die mit jeweiligen Gleitelementen 23, die in den Führungsschienen 19 verschiebbar gelagert sind, um diese Schwenkachse 22 verschwenkbar verbunden sind. Die beiden Gleitelemente 23 sind über drucksteife Antriebskabel 24 mit einem im Heckbereich angeordneten Elektro-Antriebsmotor 25 verbunden und können von diesem synchron bewegt werden.

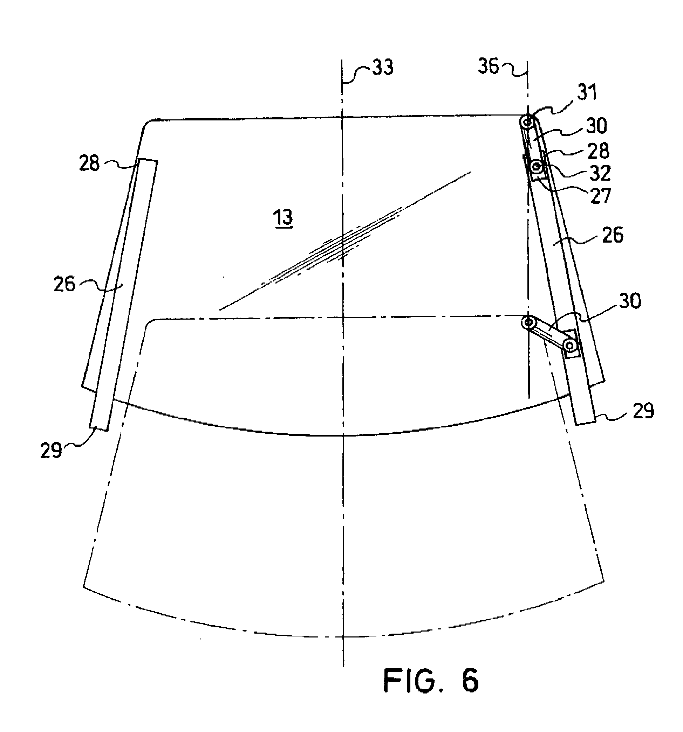

Die Heckscheibe 13 weist des weiteren eine vordere Führungseinrichtung auf, die zwei an den Innenseiten der C-Säulen 12 angeordnete Führungsschienen 26 (siehe Fig. 4) enthält, in denen jeweils ein Gleitelement 27 (siehe Fig. 6) verschiebbar aufgenommen ist. Die beiden Führungsschienen 26 verlaufen bei senkrechter Draufsicht zu einer Fahrzeugmittelebene 33 schräg oder trapezförmig, wobei die Oberenden 28 der Führungsschienen 26 entsprechend den geneigt angeordneten C-Säulen 12 näher zusammen liegen wie die Unterenden 29. In den beiden oberen Eckbereichen der Heckscheibe 13 ist jeweils ein Schwenkhebel 30 um eine zur Heckscheibe 13 in etwa senkrecht stehende Schwenkachse 31 verschwenkbar angebracht (in Fig. 6 ist nur der rechte Schwenkhebel 30 in einer Schließstellung der Heckscheibe 13 und in einer Offenstellung der Heckscheibe 13 dargestellt). Der Schwenkhebel 30 ist an dem Gleitelement 27 ebenfalls an einer Schwenkachse 32 schwenkbar gelagert. Bei der Verschiebebewegung der Heckscheibe 13 in ihre Offenstellung (in Fig. 6 mit unterbrochenen Linien dargestellt) wird der Schwenkhebel 30 verschwenkt, da sich die Schwenkachse 31 mit der Heckscheibe 13 in einer zur senkrechten Fahrzeuglängsmittelebene 33 parallelen Ebene 36 bewegt. Auf diese Weise wird ein Wegausgleich zwischen der Schwenkachse 31 und dem sich von dieser entfernenden Gleitelement 27 in der Führungsschiene 26 geschaffen.

Zum Freigeben der von der Heckscheibe 13 in Schließstellung eingenommenen Öffnung, die von den beiden C-Säulen 12, einer hinteren Lamelle 7 (im Schließzustand des Lamellendaches 6 gemäß Fig. 1) und dem Vorderrand der Kofferraumklappe 2 begrenzt wird, werden nach dem Öffnen des Lamellendaches 6 über den Antriebsmotor 25 und die Antriebskabel 24 die beiden Gleitelemente 23 in den hinteren Führungsschienen 19 nach hinten verschoben, wobei sie die Heckscheibe 13 nach unten und nach hinten unter die Kofferraumklappe 2 ziehen. Dabei folgt der Vorderrand 34 der Heckscheibe 13 dem Verlauf der beiden vorderen Führungsschienen 26, die in seitlicher Draufsicht gekrümmt sind und an ihrem Oberende 28 auf einem Anfangswegstück die Heckscheibe 13 stärker absenken, so daß die Heckscheibe 13 aus ihrer dichten Anlage an einer die Öffnung umgebenden Heckscheibendichtung zum Fahrzeuginnenraum bewegt wird. Somit wird die Heckscheibe 13 um die untere Schwenkachse 22 verschwenkt, während sie mit ihrem Hinterrand 20 unter die Kofferraumklappe 2 gefahren wird.

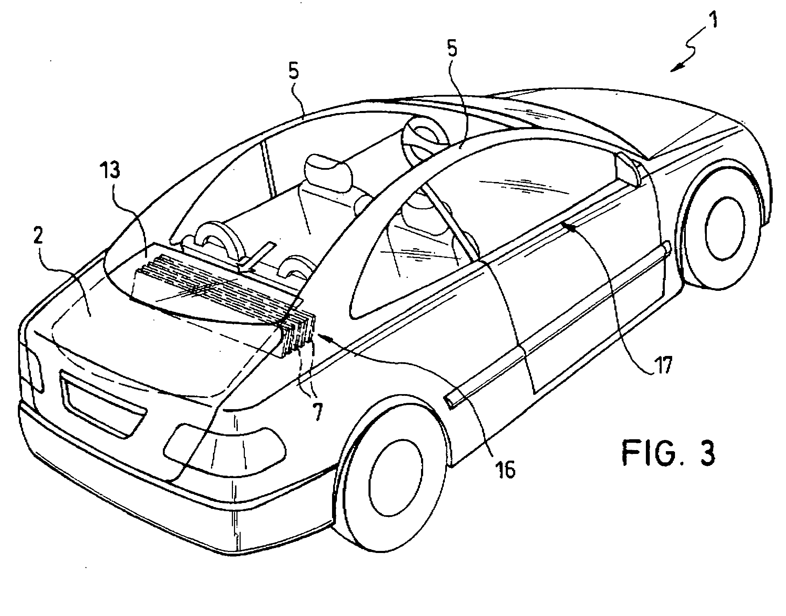

In der vollständig geöffneten Stellung des Lamellendaches 6 und der Heckscheibe 13 (siehe Fig. 3) ist somit eine einem Cabriolet ähnliche große Dachöffnung gebildet, wobei jedoch die Dachlängsholme 5 und die C-Säulen 12 in ihrer Position verbleiben und eine starre Struktur bilden, die im Falle eines Überschlags den Insassen einen hohen Schutz gewähren.

Mittels einer Betätigungseinrichtung kann zuerst das Lamellendach 6 geöffnet und in den Ablageraum 16 abgelegt werden und anschließend die Heckscheibe 13 geöffnet und zumindest teilweise unter die Kofferraumklappe 2 gefahren werden. Das Schließen des Daches erfolgt in umgekehrtem Bewegungsablauf. Selbstverständlich kann wahlweise auch nur das Lamellendach 6 geöffnet werden.

### Bezugszeichenliste

- 1: Fahrzeug
- 2: Kofferraumklappe
- 3: Kofferraum
- 4: Fahrzeugdach
- 5: Dachlängsholm
- 6: Lamellendach
- 7: Lamelle
- 8: Führungsschiene
- 9: Windlauf
- 10: Windschutzscheibe
- 11: A-Säule
- 12: C-Säule
- 13: Heckscheibe
- 14: Bahnabschnitt
- 15: Rücksitzlehne
- 16: Ablageraum
- 17: Gürtellinie
- 18: Abdeckung, Hutablage
- 19: Führungsschiene
- 20: Hinterrand
- 21: Lagerelement
- 22: Schwenkachse
- 23: Gleitelement
- 24: Antriebskabel
- 25: Elektro-Antriebsmotor
- 26: Führungsschiene
- 27: Gleitelement
- 28: Oberende
- 29: Unterende
- 30: Schwenkhebel
- 31: Schwenkachse
- 32: Schwenkachse
- 33: Fahrzeuglängsmittelebene
- 34: Vorderrand
- 35: Antriebsmotor
- 36: Ebene

## Patentansprüche

1. Fahrzeug mit einem Fahrzeugdach (4) mit karosseriefesten Dachlängsholmen (5), mit einer Dachöffnung im Fahrzeugdach (4), mit einer beweglichen Dachteileinrichtung (6) zum wahlweisen Verschließen oder zumindest teilweisen Freigeben der Dachöffnung, mit einer sich an das Fahrzeugdach (4) anschließenden Heckscheibe (13), die mittels einer Führungseinrichtung an der Karosserie bewegbar angeordnet ist und aus ihrer Schließstellung, in der sie eine von der Karosserie begrenzte Heckscheibenöffnung verschließt, in eine Offenstellung absenkbar ist, in der sie aus der Heckscheibenöffnung entfernt ist, sowie mit einer sich an die Heckscheibe (13) anschließenden Kofferraumklappe (2),
**dadurch gekennzeichnet,**
**dass** die Dachteileinrichtung (6) Dachteilelemente (7) aufweist, die an seitlichen Führungen (8, 14) verschiebbar geführt und beim Öffnen der Dachteileinrichtung (6) in einen hinteren Ablageraum (16) ablegbar sind, der im wesentlichen unterhalb der Heckscheibe (13) angeordnet ist, und
**dass** die Heckscheibe (13) in ihrer Offenstellung zumindest teilweise unter der Kofferraumklappe (2) an seitlichen karosseriefesten Führungsschienen (19, 26) angeordnet ist.

2. Fahrzeug nach Anspruch 1,
**dadurch gekennzeichnet, daß** die Dachteileinrichtung (6) ein Lamellendach (6) ist und die Dachteilelemente (7) Lamellen (7) des Lamellendaches (6) sind.

3. Fahrzeug nach Anspruch 1 oder 2,
**dadurch gekennzeichnet, daß** die Heckscheibe (13) im Bereich ihres Hinterrandes (20) um eine Querachse (22) schwenkbar an einer hinteren Führungseinrichtung (19) gelagert ist.

4. Fahrzeug nach Anspruch 3,
**dadurch gekennzeichnet, daß** die Führungseinrichtung (19) zwei voneinander beabstandete, insbesondere parallele Längsführungsschienen (19) aufweist, die in Seitenbereichen des Kofferraums (3) angeordnet sind.

5. Fahrzeug nach Anspruch 3 oder 4,
**dadurch gekennzeichnet, daß** an der Heckscheibe (13) Lagerteile (21) angebracht sind, die an den Längsführungsschienen (19) verschiebbar geführt sind.

6. Fahrzeug nach Anspruch 5,
**dadurch gekennzeichnet, daß** die Lagerteile (21) mit in den Längsführungsschienen (19) verschiebbar gelagerten Gleitelementen (23) gekoppelt sind, die von einer Antriebseinrichtung (24, 25) bewegbar sind.

7. Fahrzeug nach einem der Ansprüche 1 bis 6,
**dadurch gekennzeichnet, daß** die Heckscheibe (13) im Bereich ihres Vorderrandes (34) mit einer vorderen Führungseinrichtung (26, 27) gekoppelt ist.

8. Fahrzeug nach Anspruch 7,
**dadurch gekennzeichnet, daß** die vordere Führungseinrichtung (26, 27) der Heckscheibe (13) zwei nichtparallele Führungsschienen (26) aufweist, an denen die Heckscheibe (13) über Ausgleichselemente (30) verschiebbar gelagert ist.

9. Fahrzeug nach Anspruch 7 oder 8,
**dadurch gekennzeichnet, daß** die Heckscheibe (13) beim Öffnungsvorgang mittels der vorderen Führungseinrichtung (27) in einer anfänglichen Absenkbewegung aus einem Heckscheibenrahmen geführt ist.

10. Fahrzeug nach einem der Ansprüche 1 bis 9,
**dadurch gekennzeichnet, daß** die Dachteilelemente bzw. die Lamellen (7) an Längsführungen (8) geführt sind, die entlang der seitlichen Dachlängsholme (5) und abwärts zu dem Ablageraum (16) verlaufen, und daß die Dachteilelemente bzw. die Lamellen (7) im Ablageraum (16) nebeneinander insbesondere in annähernd vertikaler Ausrichtung gestapelt sind.

11. Fahrzeug nach einem der beiden Ansprüche 1 bis 10,
**dadurch gekennzeichnet, daß** die Dachteilelemente bzw. die Lamellen (7) des Lamellendaches (6) mittels einer insbesondere an einem Windlauf (9) angeordneten Antriebseinrichtung (10) verschiebbar sind.

12. Fahrzeug nach einem der Ansprüche 1 bis 11,
**dadurch gekennzeichnet, daß** eine Betätigungseinrichtung vorgesehen ist, mit der das Lamellendach (6) und die Heckscheibe (13) in gekoppelter Abfolge oder unabhängig voneinander zu öffnen und zu schließen sind.

13. Fahrzeug nach Anspruch 1 bis 12,
**dadurch gekennzeichnet, daß** der Ablageraum (16) für Dachteilelemente bzw. die Lamellen (7) von einer Abdeckung (18), insbesondere einer Hutablage (18), bei geschlossenem Lamellendach (6) abdeckt ist und durch Entfernen der Abdeckung aus ihrer Abdeckposition für die Lamellen (7) aufnahmebereit ist.

14. Fahrzeug nach Anspruch 13,
**dadurch gekennzeichnet, daß** die Abdeckung (18) in eine untere Stellung verfahrbar ist, in der sie einen Boden des Ablageraumes (16) bildet.

## Claims

1. Vehicle having a vehicle roof (4) with roof longitudinal members (5) fixed to the body, having a roof opening in the vehicle roof (4), having a movable roof dividing device (6) for optionally closing or at least partly opening the roof opening, having a rear window (13) which adjoins the vehicle roof (4), is arranged such that it can be moved on the body by means of a guide device and can be lowered from its closed position, in which it closes a rear window opening bounded by the body, into an open position, in which it is at a distance from the rear window opening, and also having a boot lid (2) adjoining the rear window (13),
**characterized**
**in that** the roof dividing device (6) has roof sections (7) which are guided on lateral guides (8, 14) such that they can be displaced and can be stored in a rear storage compartment (16), which is arranged substantially beneath the rear window (13), when the roof dividing device (6) is opened, and
**in that**, in its open position, the rear window (13) is arranged at least partly under the boot lid (2) on lateral guide rails (19, 26) fixed to the body.

2. Vehicle according to Claim 1, **characterized in that** the roof dividing device (6) is a louvred roof (6) and the roof sections (7) are louvres (7) of the louvred roof (6) .

3. Vehicle according to Claim 1 or 2, **characterized in that**, in the region of the rear edge (20), the rear window (13) is mounted such that it can be pivoted about a transverse axis (22) on a rear guide device (19).

4. Vehicle according to Claim 3, **characterized in that** the guide device (19) has two longitudinal guide rails (19) which are spaced apart from each other and in particular parallel and which are arranged in side regions of the boot (3).

5. Vehicle according to Claim 3 or 4, **characterized in that** bearing parts (21) which are guided such that they can be displaced on the longitudinal guide rails (19) are fitted to the rear window (13).

6. vehicle according to claim 5, **characterized in that** the bearing parts (21) are coupled to sliding elements (23) which are mounted such that they can be displaced in the longitudinal guide rails (19) and which can be moved by a drive device (24, 25).

7. Vehicle according to one of Claims 1 to 6, **characterized in that**, in the region of its front edge (34), the rear window (13) is coupled to a front guide device (26, 27).

8. Vehicle according to Claim 7, **characterized in that** the front guide device (26, 27) of the rear window (13) has two non-parallel guide rails (26), on which the rear window (13) is mounted via compensating elements (30) such that it can be displaced.

9. Vehicle according to Claim 7 or 8, **characterized in that**, during the opening operation, the rear window (13) is guided out of a rear window frame in an initial lowering movement by means of the front guide device (27).

10. Vehicle according to one of Claims 1 to 9, **characterized in that** the roof sections or the louvres (7) are guided on longitudinal guides (8) which run along the lateral roof longitudinal members (5) and downwards towards the storage compartment (16), and **in that** the roof sections or the louvres (7) are stacked beside one another in the storage compartment (16), in particular in an approximately vertical alignment.

11. Vehicle according to one of Claims 1 to 10, **characterized in that** the roof sections or the louvres (7) of the louvred roof (6) can be displaced by means of a drive device (10), in particular arranged on a wind deflector (9).

12. Vehicle according to one of Claims 1 to 11, **characterized in that** an actuating device is provided with which the louvred roof (6) and the rear window (13) are to be opened and to be closed in a coupled sequence or independently of each other.

13. Vehicle according to Claims 1 to 12, **characterized in that** the storage compartment (16) for roof sections or the louvres (7) is covered by a cover (18), in particular a parcel shelf (18), when the louvred roof (6) is closed and is ready to hold items as a result of removing the cover from its covering position for the louvres (7).

14. Vehicle according to Claim 13, **characterized in that** the cover (18) can be moved into a lower position, in which it forms a base of the storage compartment (16).

## Revendications

1. Véhicule équipé d'un toit (4) comprenant des longerons (5) faisant corps avec la carrosserie; une ouverture pratiquée dans ledit toit (4); un dispositif mobile (6) de clivage partiel du toit pour provoquer, sélectivement, l'occultation ou le dégagement au moins partiel de l'ouverture dudit toit ; une lunette arrière (13) située dans la continuité directe dudit toit (4), qui est agencée de façon mobile sur la carrosserie, au moyen d'un dispositif de guidage, et peut être abaissée de sa position fermée, dans laquelle elle occulte une ouverture arrière délimitée par ladite carrosserie, à une position ouverte dans laquelle elle est éloignée de ladite ouverture arrière ; ainsi qu'un hayon (2) de coffre à bagages situé dans la continuité directe de ladite lunette arrière (13),
**caractérisé par le fait**
**que** le dispositif (6) de clivage partiel du toit comporte des éléments partiels de pavillon (7) guidés à coulissement sur des guides latéraux (8, 14) et pouvant être remisés, lors de l'ouverture dudit dispositif (6) de clivage partiel du toit, dans un compartiment postérieur d'escamotage (16) situé, pour l'essentiel, au-dessous de la lunette arrière (13) ; et
**que**, dans sa position ouverte, ladite lunette arrière (13) est disposée au moins partiellement au-dessous du hayon (2) du coffre à bagages, sur des glissières latérales de guidage (19, 26) faisant corps avec la carrosserie.

2. Véhicule selon la revendication 1,
**caractérisé par le fait que** le dispositif (6) de clivage partiel du toit est un toit (6) à lamelles, et les éléments partiels de pavillon (7) sont des lamelles (7) dudit toit (6).

3. Véhicule selon la revendication 1 ou 2,
**caractérisé par le fait que** la lunette arrière (13) est montée sur un dispositif postérieur de guidage (19), dans la région de son bord postérieur (20), avec faculté de pivotement autour d'un axe transversal (22).

4. Véhicule selon la revendication 3,
**caractérisé par le fait que** le dispositif de guidage (19) comporte deux glissières longitudinales de guidage (19) notamment parallèles, espacées l'une de l'autre et situées dans des régions latérales du coffre à bagages (3).

5. Véhicule selon la revendication 3 ou 4,
**caractérisé par le fait que** des pièces de montage (21), installées sur la lunette arrière (13), sont guidées à coulissement sur les glissières longitudinales de guidage (19).

6. Véhicule selon la revendication 5,
**caractérisé par le fait que** les pièces de montage (21) sont accouplées à des éléments glissants (23) montés à coulissement dans les glissières longitudinales de guidage (19), et auxquels un dispositif d'entraînement (24, 25) peut imprimer des mouvements.

7. Véhicule selon l'une des revendications 1 à 6,
**caractérisé par le fait que** la lunette arrière (13) est accouplée à un dispositif antérieur de guidage (26, 27) dans la région de son bord antérieur (34).

8. Véhicule selon la revendication 7,
**caractérisé par le fait que** le dispositif antérieur de guidage (26, 27) de la lunette arrière (13) comporte des glissières de guidage (26) non parallèles, sur lesquelles ladite lunette arrière (13) est montée coulissante par l'intermédiaire d'éléments compensateurs (30).

9. Véhicule selon la revendication 7 ou 8,
**caractérisé par le fait que** la lunette arrière (13) est guidée lors du processus d'ouverture, au moyen du dispositif antérieur de guidage (27), en un mouvement initial d'abaissement la faisant sortir d'un encadrement.

10. Véhicule selon l'une des revendications 1 à 9,
**caractérisé par le fait que** les éléments partiels de pavillon ou les lamelles (7) sont respectivement guidé(e)s sur des guides longitudinaux (8) s'étendant le long des longerons latéraux (5) du toit, et vers le bas en direction du compartiment d'escamotage (16) ; et **par le fait que** lesdits éléments partiels de pavillon ou lesdites lamelles (7) sont respectivement empilé(e)s en juxtaposition dans ledit compartiment d'escamotage (16), en particulier avec orientation approximativement verticale.

11. Véhicule selon l'une des deux revendications 1 à 10,
**caractérisé par le fait que** les éléments partiels de pavillon ou les lamelles (7) du toit (6) à lamelles peuvent être respectivement animé(e)s de coulissements au moyen d'un dispositif d'entraînement (10) implanté, en particulier, sur une moulure déflectrice (9).

12. Véhicule selon l'une des revendications 1 à 11,
**caractérisé par** la présence d'un dispositif d'actionnement par lequel le toit (6) à lamelles et la lunette arrière (13) peuvent être ouverts et fermés en succession accouplée, ou indépendamment l'un de l'autre.

13. Véhicule selon les revendications 1 à 12,
**caractérisé par le fait que** le compartiment d'escamotage (16), respectivement destiné à des éléments partiels de pavillon ou aux lamelles (7), est recouvert par une pièce de recouvrement (18) et notamment par une plage arrière (18), à l'état fermé du toit (6) à lamelles, et est prêt à recevoir lesdites lamelles (7) à partir de sa position recouverte, par enlèvement de ladite pièce de recouvrement.

14. Véhicule selon la revendication 13,
**caractérisé par le fait que** la pièce de recouvrement (18) peut être amenée à une position inférieure dans laquelle elle matérialise un fond du compartiment d'escamotage (16).
